# FASCICULE DE BREVET EUROPEEN

(11) **EP 4 256 916 B1**
(45) Date de publication et mention de la délivrance du brevet: **08.10.2025**
(21) Numéro de dépôt: 23166669.4
(22) Date de dépôt: 05.04.2023
(51) Int. Cl.: A01B 63/11, E02F 9/22

(54) **MACHINE DE FENAISON AVEC UN ALLEGEMENT HYDRAULIQUE AMELIORE ET SON PROCEDE DE MISE EN FONCTIONNEMENT**
HEUMASCHINE MIT VERBESSERTER HYDRAULISCHER GEWICHTSENTLASTUNG UND BETRIEBSVERFAHREN
HAYMAKING MACHINE WITH IMPROVED HYDRAULIC WEIGHT COMPENSATION AND METHOD FOR ITS OPERATION

(30) Priorité: 07.04.2022 FR 2203192
(43) Date de publication de la demande: 11.10.2023
(73) Titulaire: Kuhn SAS, 67700 Saverne (FR)
(72) Inventeur: GANTZER, Christian, 57915 WOUSTVILLER (FR); CORNIL, Thomas, 67790 STEINBOURG (FR)
(74) Mandataire: Hager, Esther Evelyne

(56) Documents cités:
- EP-A1- 2 316 256
- DE-A1- 3 628 427
- DE-U1- 29 507 623

## Description

La présente invention concerne le domaine du machinisme agricole et notamment les machines agricoles de fenaison.

L'invention porte plus spécifiquement sur une machine agricole destinée à être attelée à un véhicule tracteur et comportant une unité de travail reliée à un châssis par rapport auquel l'unité de travail est déplaçable, la machine pouvant occuper une configuration de travail dans laquelle l'unité de travail repose au moins partiellement au sol et une configuration de transport dans laquelle l'unité de travail est soulevée du sol. La machine comprend un dispositif d'allégement comportant au moins un vérin d'allégement relié avec le châssis d'un côté et avec l'unité de travail de l'autre côté, le vérin d'allégement pouvant reporter, en configuration de travail, au moins une partie du poids de l'unité de travail sur le châssis.

De manière connue, sur des machines agricoles comportant une unité de travail lourde, cette unité de travail est allégée par un ou des vérin(s) relié(s) à un voire plusieurs accumulateur(s) de pression hydropneumatique, ce afin d'éviter une détérioration du tapis végétal sur lequel elle glisse ou roule lors de son fonctionnement. Un inconvénient de ce type d'allégements est que le poids de l'unité de travail reporté sur le châssis n'est pas constant (il en est de même pour un allègement par ressorts) : l'unité de travail est souvent plus allégée lorsqu'elle se retrouve en bas que lorsqu'elle se retrouve en haut de sa course verticale. Avec un allégement trop important, lorsque l'unité de travail est soulevée, par exemple après avoir franchi une protubérance dans le sol, un certain temps est nécessaire avant que l'unité de travail atteigne à nouveau le sol, impliquant une mauvaise qualité de travail à cet endroit. Un faible allégement peut, lui, entrainer une détérioration du tapis végétal et/ou de l'unité de travail. En outre, les accumulateurs de pression hydropneumatique étant des réserves d'énergie sous pression, ils sont particulièrement dangereux et nécessitent des précautions particulières lors de leur assemblage, lors de l'utilisation de la machine, et même lors de l'expédition de la machine dès lors qu'ils dépassent une certaine capacité. De ce fait, chaque accumulateur de pression nécessite des contrôles réguliers et l'ajout obligatoire de composants de sécurité supplémentaires, comme une valve de sécurité par exemple.

Une machine telle qu'évoquée en introduction est connue du document DE 3628427. Sur cette machine, une première chambre du vérin d'allégement peut être reliée à la pompe par une conduite pressurisée et une deuxième chambre à un réservoir par une conduite retour, ces conduites étant reliées entre elles par un limiteur de pression. Une telle installation hydraulique permet de diminuer la pression d'appui de l'unité de travail sur le sol de manière à ménager le tapis végétal sur lequel elle se déplace, tout en permettant un certain réglage de cette pression. Sur ce dispositif, la pression est mesurée dans la conduite pressurisée, et, si cette pression mesurée est supérieure à une valeur de consigne, un signal est envoyé au limiteur de pression de sorte que celui-ci laisse passer davantage de fluide de la pompe vers le réservoir (sans passer par le vérin). Ceci permet de dévier l'huile de la conduite pressurisée vers la conduite retour et donc de faire diminuer la pression au niveau de la première chambre du vérin. Lorsque la pression mesurée dans la conduite pressurisée (égale à celle de la première chambre) est moindre que la consigne de réglage, alors le limiteur de pression est (à nouveau) fermé, de sorte que la pression dans la chambre augmente à nouveau.

Avec un tel montage hydraulique, même lorsque le limiteur de pression laisse passer du fluide vers le réservoir sans passer par le vérin, la pompe doit toujours fournir une pression supérieure à la valeur de consigne du limiteur de manière à maintenir celui-ci en configuration 'ouverte'. Il ressort de ce qui précède que quelle que soit la pression mesurée dans la première chambre, la pompe doit constamment alimenter en huile sous pression le circuit, qu'elle soit dirigée vers le vérin d'allégement et/ou vers le réservoir. Le fait de devoir fournir de l'huile sous pression en continu nécessite une quantité importante d'énergie, respectivement de carburant, et n'est donc pas économique. De plus, une huile mise continuellement sous pression risque de chauffer, ce qui peut amener à une détérioration de ses propriétés, et à une baisse de rendement de la machine. En outre, dans le document DE 3628427, le pilotage du limiteur de pression, respectivement l'envoi du signal de réglage est réalisé de manière électromagnétique, nécessitant une installation et des composants supplémentaires, complexifiant la machine et faisant augmenter son coût de revient.

Le but principal de la présente invention est de remédier au moins partiellement aux problèmes précités, et notamment d'éviter l'utilisation d'accumulateur de pression.

A cet effet, l'invention a pour objet une machine agricole destinée à être attelée à un véhicule tracteur et comportant une unité de travail reliée à un châssis par rapport auquel l'unité de travail est déplaçable, la machine pouvant occuper une configuration de travail dans laquelle l'unité de travail repose au moins partiellement au sol et une configuration de transport dans laquelle l'unité de travail est soulevée du sol. La machine comprend un dispositif d'allégement comportant au moins un vérin d'allégement relié avec le châssis d'un côté et avec l'unité de travail de l'autre côté, le vérin d'allégement pouvant reporter, en configuration de travail, au moins une partie du poids de l'unité de travail sur le châssis. La machine est caractérisée en ce que le dispositif d'allégement comprend un régulateur de pression relié à une chambre active du vérin d'allégement par une première conduite, le régulateur de pression occupant, lorsque la pression dans la première conduite est inférieure à une valeur de consigne, une première position dans laquelle il autorise la circulation de fluide hydraulique entre la première conduite et une deuxième conduite reliant le régulateur de pression avec une pompe hydraulique dans la configuration de travail de la machine, le régulateur de pression occupant, lorsque la pression dans la première conduite est supérieure à la valeur de consigne, une deuxième position dans laquelle il autorise une circulation de fluide hydraulique entre la première conduite et une troisième conduite reliant le régulateur de pression avec un réservoir dans la configuration de travail de la machine.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] est une vue en élévation latérale d'une machine agricole selon l'invention, attelée à l'avant d'un véhicule tracteur et en configuration de travail.
[Fig. 2] est une vue en perspective de l'objet de la figure 1.
[Fig. 3] est une vue en élévation latérale d'une machine agricole selon l'invention, attelée à l'avant d'un véhicule tracteur et en configuration de transport.
[Fig. 4] représente une vue en élévation latérale d'une machine agricole selon une variante de l'invention dans laquelle le châssis fait partie intégrante de la machine.
[Fig. 5A] représente symboliquement un circuit hydraulique du dispositif d'allégement de la machine selon l'invention.
[Fig. 5B] représente symboliquement un autre circuit hydraulique possible de la machine selon l'invention.
[Fig. 5C] représente encore symboliquement un circuit hydraulique possible de la machine selon l'invention.

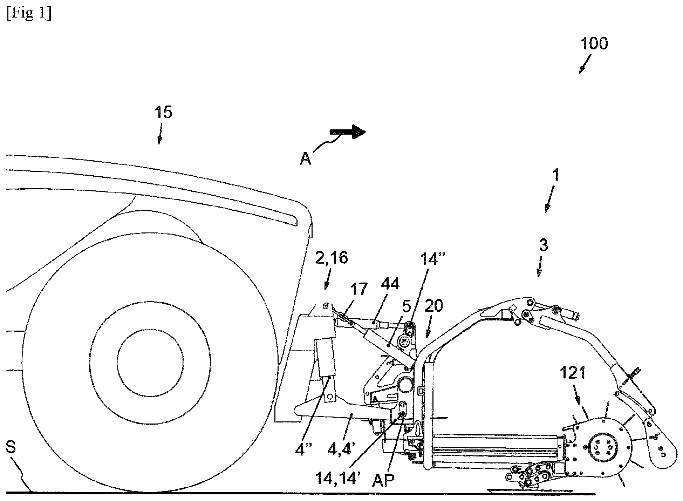

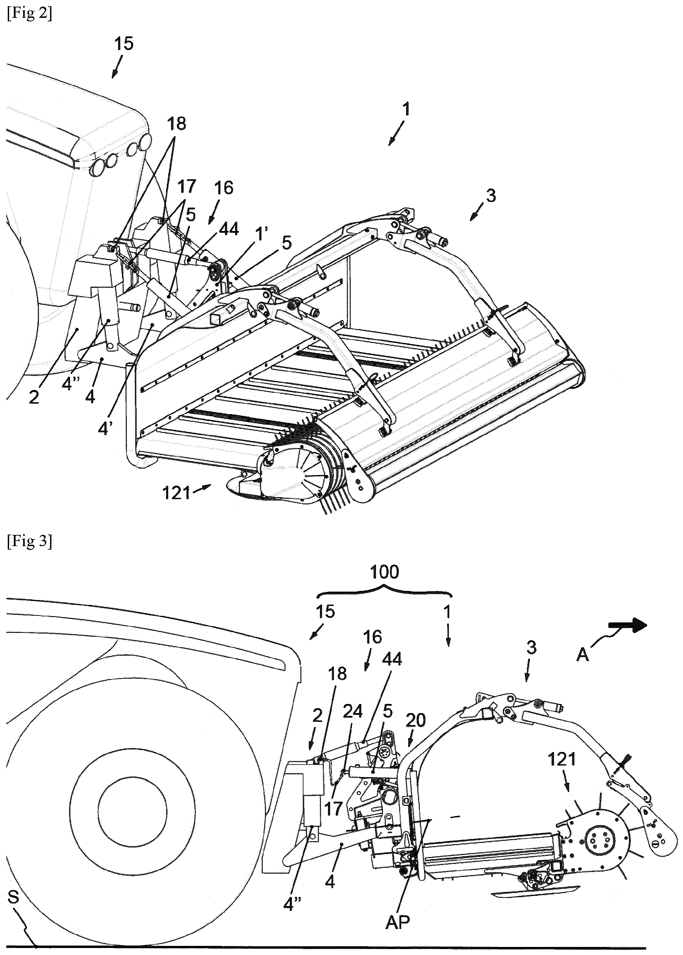

Les figures 1 et 2 montrent une machine (1) agricole destinée à être attelée à un véhicule tracteur (15). La machine (1) comporte une unité de travail (3) reliée à un châssis (2) par rapport auquel l'unité de travail (3) est déplaçable. La machine (1) peut occuper une configuration de travail dans laquelle l'unité de travail (3) repose au moins partiellement au sol (S). La machine (1) peut aussi occuper une configuration de transport dans laquelle l'unité de travail (3) est soulevée du sol (S). La machine (1) comprend un dispositif d'allégement (9) comportant au moins un vérin d'allégement (5) relié avec le châssis (2) d'un côté. Le vérin d'allégement (5) est relié avec l'unité de travail (3) de l'autre côté. Le vérin d'allégement (5) peut reporter, en configuration de travail, au moins une partie du poids de l'unité de travail (3) sur le châssis (2).

Conformément à l'invention, le dispositif d'allégement (9) comprend un régulateur de pression (6) relié à une chambre active (5') du vérin d'allégement (5) par une première conduite (7). De plus, le régulateur de pression (6) peut occuper, dans la configuration de travail de la machine (1), une première position (61) dans laquelle il autorise la circulation de fluide hydraulique entre la première conduite (7) et une deuxième conduite (8) reliant le régulateur de pression (6) avec une pompe (P) hydraulique. Aussi, le régulateur de pression (6) peut occuper, dans la configuration de travail de la machine (1), une deuxième position (62) dans laquelle il autorise une circulation de fluide hydraulique entre la première conduite (7) et une troisième conduite (11) reliant le régulateur de pression (6) avec un réservoir (T). Par ailleurs, la position du régulateur de pression (6) est dépendante de la pression dans la première conduite (7) de telle sorte que lorsque la pression dans la première conduite (7) est inférieure à une valeur de consigne, le régulateur de pression (6) occupe la première position et que lorsque la pression dans la première conduite (7) est supérieure à la valeur de consigne, le régulateur de pression (6) occupe la deuxième position. De préférence, la position du régulateur de pression (6) est uniquement dépendante de la pression dans la première conduite (7).

Grâce à ces dispositions, la pression dans la chambre active (5') est maintenue constante, résultant en un allégement constant et impliquant une meilleure qualité de travail ainsi qu'une détérioration moindre du tapis végétal, ce sans accumulateur de pression hydropneumatique. Ainsi, la chambre active (5') du vérin d'allégement (5) n'est reliée à aucun accumulateur de pression hydropneumatique en configuration de travail de la machine (1). En outre, l'injection de fluide n'étant réalisée que dans la première position (61) du régulateur de pression (6), le dispositif d'allégement (9) ne sollicite pas la pompe (P) en permanence, réduisant la puissance nécessaire au fonctionnement de la machine (1). En effet, en deuxième position (62) du régulateur de pression (6), la pompe (P) ne doit pas fournir de pression au dispositif d'allégement (9), le fluide risquant ainsi moins de chauffer, conservant ses propriétés plus longtemps, et réduisant le risque de baisse de performance de la machine (1) ainsi que la fréquence de vidange nécessaire. Le fait que la position du régulateur de pression (6) ne dépende pas d'un actionnement de l'opérateur permet que l'allégement soit constant sans nécessiter de surveillance humaine, celle-ci pouvant en effet être défaillante ou induire un temps de réaction pouvant entrainer une diminution de la qualité de travail et/ou une augmentation de la détérioration du tapis végétal.

Dans la première position (61) du régulateur de pression (6), la troisième conduite (11) n'est pas reliée à la première conduite (7). Dans cette première position (61), la chambre active (5') du vérin d'allégement (5) n'est ainsi pas reliée au réservoir (T). Dans la deuxième position (62) du régulateur de pression (6), la deuxième conduite (8) n'est pas reliée à la première conduite (7). Dans cette deuxième position (62), la chambre active (5') du vérin d'allégement (5) n'est ainsi pas reliée à la pompe (P).

Lors du fonctionnement de la machine (1), celle-ci est déplacée par le véhicule tracteur (15) selon une direction d'avance (A). Selon le mode de réalisation préféré des figures 1 à 3, la machine (1) comprend un bâti (1') portant l'unité de travail (3). Le bâti (1') est configuré pour relier l'unité de travail (3) au châssis (2). Dans le mode de réalisation préféré, le châssis (2) fait partie intégrante du véhicule tracteur (15). Dans le mode de réalisation préféré, l'unité de travail (3) est articulée avec le bâti (1') au moins autour d'un axe pendulaire (AP) sensiblement parallèle à la direction d'avance (A). De manière simple, l'axe pendulaire (AP) est avantageusement situé dans un plan médian (PM) de l'unité de travail (3). Dans un mode de réalisation alternatif, l'unité de travail (3) n'est pas articulée, de sorte que le bâti (1') fait partie de l'unité de travail (3).

L'unité de travail (3) est reliée au châssis (2) par deux bras inférieurs (4, 4'). Dans le mode de réalisation préféré, l'unité de travail (3) est également reliée au châssis (2) par un bras supérieur (44). La machine (1), respectivement le bâti (1'), comprend deux sites d'accrochage inférieurs (14, 14') permettant l'accrochage des bras inférieurs (4, 4'). Le plan médian (PM) de l'unité de travail (3) est à équidistance des sites d'accrochage (14, 14') inférieurs. La machine (1), respectivement le bâti (1'), comprend également un site d'accrochage supérieur (14") permettant l'accrochage du bras supérieur (44). Le plan médian (PM) passe par le site d'accrochage supérieur (14"). Le plan médian (PM) est vertical lorsque la machine (1) est sur un sol (S) horizontal. En outre, le plan médian (PM) est parallèle à la direction d'avance (A). Au moins un des bras inférieurs (4, 4') est relié au châssis (2) par un vérin de levage (4"). Le véhicule tracteur (15) comporte un dispositif d'attelage (16). Le dispositif d'attelage (16) comporte au moins deux bras inférieurs (4, 4'), un bras supérieur (44) et un vérin de levage (4"). Chaque bras (4, 4', 44) est articulé avec l'unité de travail (3) d'un côté, et avec le châssis (2) de l'autre, au moins autour d'axes sensiblement horizontaux, autorisant le déplacement vertical de l'unité de travail (3) par rapport au châssis (2). De préférence, le bras supérieur (44) et chaque bras inférieur (4, 4') est articulé avec l'unité de travail (3) par une rotule au niveau du site d'accrochage (14, 14', 14") respectif.

Le vérin d'allégement (5) est relié, directement ou indirectement, avec le châssis (2) d'un côté. Autrement dit, le châssis (2) est relié, directement ou non, soit avec la tige, soit avec le corps du vérin d'allégement (5). Le vérin d'allégement (5) est relié avec l'unité de travail (3) de l'autre côté. Autrement dit, l'unité de travail (3) est reliée à celui de la tige ou du corps du vérin d'allégement (5) qui n'est pas relié(e) avec le châssis (2). Selon un mode de réalisation alternatif non représenté, le vérin d'allégement (5) peut également être relié au châssis (2) d'un côté, et avec l'unité de travail (3) par le biais du dispositif d'attelage (16), respectivement par le biais d'un des bras (4, 4', 44).

De préférence, la deuxième conduite (8) est reliée au circuit hydraulique du véhicule tracteur (15) via un distributeur (19). Le distributeur (19) fait préférentiellement partie du véhicule tracteur (15). Le circuit hydraulique du véhicule tracteur (15) comprend la pompe (P) et le réservoir (T). En configuration de travail de la machine (1), le distributeur (19) est dans une première position (191). Dans sa première position (191), le distributeur (19) relie la deuxième conduite (8) à la pompe (P).

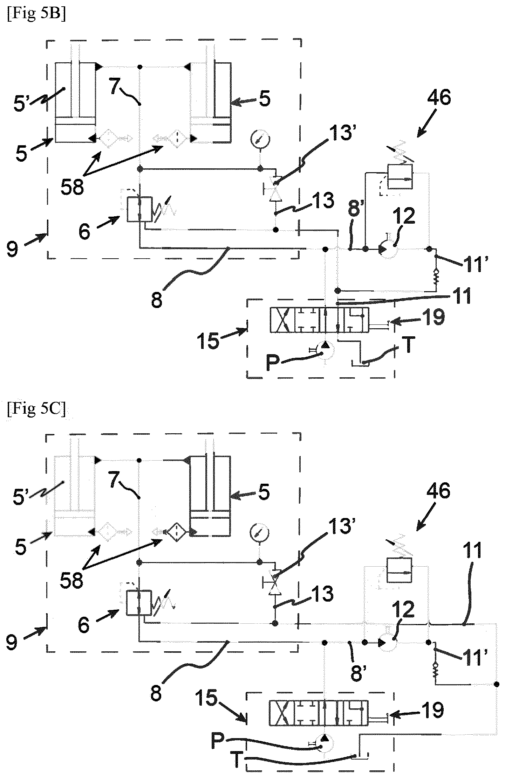

Dans le mode de réalisation de la figure 5B, la troisième conduite (11) est également reliée au circuit hydraulique du véhicule tracteur (15) via le ou un distributeur (19). Sur cette figure, dans sa première position (191), le distributeur (19) relie la troisième conduite (11) au réservoir (T). Dans le mode de réalisation de la figure 5B, une erreur de manipulation du distributeur (19) peut amener non seulement à ce que le vérin d'allégement (5) n'exerce plus d'effort dirigé vers le haut sur l'unité de travail (3), de sorte que l'unité de travail (3) présente plus de risques de détériorer le tapis végétal du sol (S), mais peut également amener à ce que le ou chaque vérin d'allégement (5) entre en contact avec le véhicule tracteur (15) entrainant des dégâts sur le véhicule tracteur (15) et/ou le vérin d'allégement (5).

Dans le mode de réalisation préféré représenté sur la figure 5C, la troisième conduite (11) est directement reliée au ou à un réservoir (T). De cette façon, un utilisateur ne peut pas relier la troisième conduite (11) avec la pompe (P), même suite à une mauvaise manipulation du distributeur (19). Ainsi, dans le mode de réalisation préféré, il n'y a jamais de pression dans la troisième conduite (11).

Selon le mode de réalisation de la figure 5B, la deuxième conduite (8) et la troisième conduite (11) sont reliées au circuit hydraulique du véhicule tracteur (15) via un distributeur (19). En configuration de travail de la machine (1), le distributeur (19) est dans une première position (191). Dans la présente description, à moins d'une mention contraire, le distributeur (19) est à considérer en première position (191) et la machine (1) en configuration de travail. Le distributeur (19) est par exemple une vanne de distribution sélective à tiroir, préférentiellement actionnable depuis le véhicule tracteur (15).

Afin de pouvoir amener la pression dans le circuit hydraulique du dispositif d'allégement (9), respectivement dans le circuit hydraulique de la machine (1), au niveau de la pression atmosphérique, il est possible de placer le distributeur (19) dans une position flottante (192). Dans sa position flottante (192), le distributeur (19) permet de relier la deuxième conduite (8) au réservoir (T). Dans la position flottante (192), le distributeur (19) relie également le réservoir (T) et la troisième conduite (11), le cas échéant.

Dans la configuration de travail de la machine (1), le vérin de levage (4") est en mode flottant. En mode flottant, un vérin autorise la variation de sa longueur lorsqu'il est soumis à des efforts extérieurs. Le mode flottant du vérin de levage (4") permet le déplacement de l'unité de travail (3) par rapport au châssis (2) selon le relief du sol (S). Préférentiellement, placer le vérin de levage (4") en mode flottant revient à relier ses chambres au réservoir (T).

La chambre active (5') du vérin d'allégement (5) peut être reliée à la ou une pompe (P) hydraulique. La chambre active (5') du vérin d'allégement (5) peut aussi être reliée au ou à un réservoir (T). Lorsque la chambre active (5') du vérin d'allégement (5) est reliée à la pompe (P), le vérin d'allégement (5) exerce sur le bâti (1'), respectivement sur l'unité de travail (3), un effort dont au moins une composante est orientée vers le haut, au moins après un laps de temps. L'effort du vérin d'allégement (5) sur l'unité de travail (3) dépend de la pression dans la chambre active (5'). Une fois la valeur de consigne atteinte dans la chambre active (5'), le régulateur de pression (6) maintient la pression dans la chambre active (5') constante en configuration de travail, de sorte que l'effort du vérin d'allégement (5) sur l'unité de travail (3), dont au moins une composante est orientée vers le haut, est constant. Sur la figure 1, l'unité de travail (3) ne repose ainsi que partiellement au sol (S) du fait qu'une partie du poids de la machine (1) est reportée sur le châssis (2), respectivement sur l'essieu avant du véhicule tracteur (15).

Dans la configuration de transport, ainsi que représenté sur la figure 3, l'unité de travail (3) est soulevée du sol (S). La configuration de travail peut être obtenue, à partir de la configuration de transport, en reliant la chambre active (5') au réservoir (T) et en allongeant le vérin de levage (4") jusqu'à ce que l'unité de travail (3) atteigne le sol (S), après quoi le vérin de levage (4") doit être placé en mode flottant, puis la chambre active (5') reliée à la pompe (P). Avec un tel procédé de transposition entre configurations de transport et de travail, la machine (1) atteint cependant le sol (S) violemment, ce qui peut endommager la machine (1) et/ou le tapis végétal du sol (S). La configuration de travail est ainsi préférentiellement obtenue, à partir de la configuration de transport, en plaçant le vérin de levage (4") en mode flottant jusqu'à ce que l'unité de travail (3) atteigne le sol (S), et en reliant la chambre active (5') à une pompe (P). De manière à profiter d'une certaine course du vérin d'allégement (5) lorsque l'unité de travail (3) monte et descend par rapport au véhicule tracteur (15) depuis une position de référence, la chambre active (5') du vérin d'allégement (5) est reliée à la pompe (P) lorsque la machine (1) et le véhicule tracteur (15) reposent sur un sol (S) plan. Tant que la pression dans la chambre active (5') n'a pas atteint la valeur de consigne, le régulateur de pression (6) est dans sa première position (61). Après un laps de temps, la pression dans la chambre active (5') atteint la valeur de consigne de sorte que le régulateur de pression (6) passe en deuxième position (62).

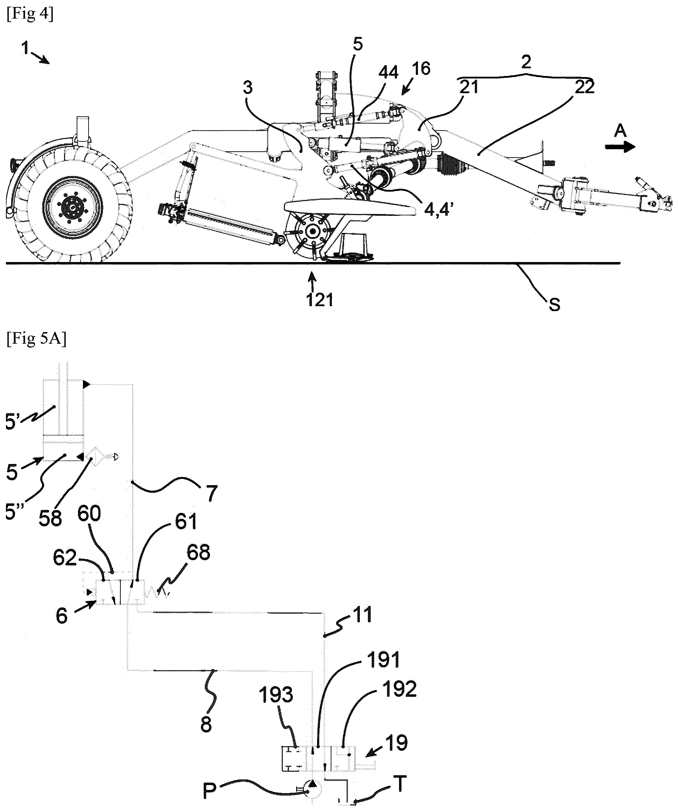

En se référant à la figure 5A, lors du fonctionnement de la machine (1), lorsque la pression dans la chambre active (5') devient moindre que la valeur de consigne, par exemple lorsque le vérin d'allégement (5) se rétracte du fait que l'unité de travail (3) est sur une bosse, le régulateur de pression (6) passe en première position (61) et reste dans cette position, jusqu'à ce que la pression dans la chambre active (5') devienne supérieure à la valeur de consigne. Lorsque la pression dans la chambre active (5') dépasse la valeur de consigne, par exemple lorsque le vérin d'allégement (5) s'allonge du fait que l'unité de travail (3) se retrouve dans un trou, le régulateur de pression (6) passe en deuxième position (62) et reste dans cette position jusqu'à ce que la pression dans la chambre active (5') devienne inférieure à la valeur de consigne. Le régulateur de pression (6) a ainsi tendance à osciller entre ces deux positions, maintenant la pression dans la chambre active (5') du vérin d'allégement (5) sensiblement constante.

Ainsi qu'il ressort de la figure 5A, la pression dans la première conduite (7) est mesurée via une conduite de pilotage (60) faisant partie du régulateur de pression (6). La première conduite (7) reliant la chambre active (5') au régulateur de pression (6), la pression dans la première conduite (7) est égale à la pression dans la chambre active (5'). La valeur de consigne est propre au régulateur de pression (6). Afin de pouvoir régler l'effort du vérin d'allégement (5) sur l'unité de travail (3), la valeur de consigne est réglable, préférentiellement via un ressort (68) du régulateur de pression (6). La mise en œuvre d'un ressort (68) dont la force est réglable permet de s'affranchir de toute électronique, et ainsi de réduire le coût de développement et de revient et d'aboutir à un entretien facilité. Il ressort de ce qui précède que le régulateur de pression (6) est un composant unique pouvant occuper uniquement deux positions différentes, réduisant ainsi les coûts, la complexité du montage, ainsi que le nombre et la longueur des conduites et branchements hydrauliques. Le régulateur de pression (6) peut par exemple être du type connu sous la désignation DR10-01 commercialisé par la société Hydac, ou un régulateur analogue. Dans une variante de réalisation alternative non représentée, le régulateur de pression (6) pourrait aussi être piloté électroniquement ou hydrauliquement, notamment afin de pouvoir régler la valeur de consigne lors du fonctionnement de la machine (1), et notamment depuis la cabine du véhicule tracteur (15).

Ainsi qu'il ressort des figures 5B et 5C, la machine (1) peut comprendre un actionneur hydraulique (12) relié à la deuxième conduite (8) par une quatrième conduite (8'). L'actionneur hydraulique (12) peut également être relié à la troisième conduite (11) par une cinquième conduite (11'), de préférence à sa sortie. L'actionneur hydraulique (12) assure une fonction extérieure au dispositif d'allégement (9). Une telle disposition permet de remplir plusieurs fonctions à partir d'un seul et même distributeur (19), permettant de réduire le nombre de distributeurs nécessaires au fonctionnement de la machine (1). Une telle caractéristique est intéressante pour une machine (1) frontale, notamment lorsque le véhicule tracteur (15) ne dispose que d'un seul distributeur (19) à l'avant. L'actionneur hydraulique (12) comprend préférentiellement au moins un moteur ou vérin hydraulique. Dans les exemples représentés, l'unité de travail (3) comprend un rouleau de ramassage (121) configuré pour soulever un produit de fenaison tel que de l'herbe fauchée, et le projeter vers l'arrière suivant la direction d'avance (A). Dans ces exemples représentés, l'actionneur hydraulique (12) est le moteur hydraulique entrainant en rotation le rouleau de ramassage (121). La machine (1) pourrait aussi être destinée à faucher un produit végétal sur pieds, et éventuellement également à regrouper ce produit sur un côté de la machine (1) lors de son avance.

Ainsi que représenté sur les figures 5B et 5C, un limiteur de pression (46) peut être monté aux bornes de l'actionneur hydraulique (12) afin d'éviter l'endommagement de ce dernier. Préférentiellement, le limiteur de pression (46) est relié à la quatrième conduite (8') et à la cinquième conduite (11') de sorte à limiter la pression dans la quatrième conduite (8'). La valeur de tarage à partir de laquelle ce limiteur de pression (46) laisse circuler le fluide hydraulique entre la quatrième conduite (8') et la cinquième conduite (11') peut être réglée. Afin de ne pas limiter la pression dans le circuit hydraulique du dispositif d'allégement (9), respectivement dans tout le circuit hydraulique de la machine (1), la valeur de tarage du limiteur de pression (46) est supérieure à la valeur de consigne du régulateur de pression (6). Une telle réalisation permet de limiter la pression au niveau de l'actionneur hydraulique (12) sans toutefois limiter la pression dans le vérin d'allégement (5), ce tout en utilisant un même distributeur (19) pour l'actionneur hydraulique (12) et le vérin d'allégement (5). De plus, la position du limiteur de pression (46) aux bornes de l'actionneur hydraulique (12) permet que l'effort du vérin d'allégement (5) sur l'unité de travail (3) reste constant. En effet, si un tel limiteur de pression (46) était relié à la première conduite (7), la pression dans la chambre active (5') du vérin d'allégement (5) serait limitée par la valeur la plus basse entre la valeur de consigne du régulateur de pression (6) et la valeur de tarage du limiteur de pression (46).

Ainsi que représenté sur les figures 5B et 5C, afin de ne pas perturber le fonctionnement du ou de chaque actionneur hydraulique (12) lorsque le régulateur de pression (6) est dans sa deuxième position (62), un clapet anti-retour peut être monté sur la cinquième conduite (11'), de manière à bloquer la circulation de fluide hydraulique en direction de l'actionneur hydraulique (12).

La machine (1) comprend une conduite de vidange (13) sur laquelle est montée une valve d'arrêt (13') fermée en configuration de travail. Cette conduite de vidange (13) relie la première conduite (7) à la troisième conduite (11). Dans la présente description, à moins d'une mention contraire, la valve d'arrêt (13') est considérée fermée. Une telle disposition permet, en ouvrant la valve d'arrêt (13'), de vidanger simplement et rapidement le vérin d'allégement (5) sans le distributeur (19). Afin que l'utilisateur puisse connaitre la pression dans la chambre active (5') du vérin d'allégement (5), un manomètre est monté en série sur la première conduite (7) ou sur la conduite de vidange (13).

Dans le mode de réalisation préféré, la pompe (P), le réservoir (T) et le distributeur (19) font partie intégrante du véhicule tracteur (15). Afin d'éviter une sollicitation trop importante du circuit hydraulique du véhicule tracteur (15) pouvant amener à une perturbation d'une ou de certaines fonctions de la machine (1), il est cependant possible que la pompe (P), le réservoir (T) et le distributeur (19) soient intégrés à la machine (1), notamment si la machine (1) comporte plusieurs unités de travail (3). En outre, une machine (1) comportant la pompe (P) et le réservoir (T) permet de mieux maitriser la propreté du fluide hydraulique.

Dans le mode de réalisation préféré des figures 1 à 3, le vérin d'allégement (5) est relié avec le châssis (2) par un tirant souple en compression (17). Le tirant souple en compression (17) est attaché avec le vérin d'allégement (5) au niveau d'un point d'attache (24). Le tirant souple en compression (17) est attaché avec le châssis (2) au niveau d'un site de fixation (18). Le tirant souple en compression (17) est par exemple un câble (figure 3) ou une chaîne (figure 1). Il pourrait également s'agir d'un dispositif comportant une broche fixée avec l'un au choix entre le châssis (2) et le vérin d'allégement (5) et pouvant se déplacer librement dans le trou oblong d'une pièce fixée avec celui du châssis (2) et du vérin d'allégement (5) qui n'est pas fixé avec la broche. De manière simple et ainsi que représenté sur les figures 1 à 3, le tirant souple en compression (17) est une chaîne, chaque maillon pouvant avantageusement servir d'attache du vérin d'allégement (5) avec le châssis (2) au niveau du site de fixation (18). Ainsi quel que soit le véhicule tracteur (15) auquel la machine (1) est reliée, l'unité de travail (3) peut reposer au sol (S). Le vérin d'allégement (5) est solidarisé avec l'unité de travail (3) au niveau d'une articulation avant (20). Le cas échéant, le vérin d'allégement (5) est fixé à l'unité de travail (3) via le bâti (1') au niveau de cette articulation avant (20). Grâce aux différentes attaches du tirant souple en compression (17), il est possible de modifier la longueur entre le site de fixation (18) et l'articulation avant (20). La machine (1) peut donc être aisément attelée à différents types et/ou différentes hauteurs de véhicules tracteurs (15) sans devoir adapter la course du vérin d'allégement (5) à ceux-ci. Dans la configuration de travail au moins, le site de fixation (18) étant plus éloigné du sol (S) que l'articulation avant (20) du vérin d'allégement (5) avec le bâti (1'), l'effort du vérin d'allégement (5) sur l'unité de travail (3) est au moins partiellement orienté vers le haut.

Ainsi qu'il ressort de la figure 5A, le vérin d'allégement (5) comprend une chambre active (5') reliée à la première conduite (7). Le vérin d'allégement (5) comprend également une chambre passive (5") séparée de la chambre active (5') par un piston. La chambre passive (5") est reliée à l'air. La chambre passive (5") est préférentiellement reliée à l'air par un reniflard (58). Le reniflard (58) est un bouchon laissant passer l'air, préférentiellement en filtrant celui-ci.

Le vérin d'allégement (5) peut être de type simple effet. En effet, la descente de l'unité de travail (3) d'une machine (1) telle que décrite ci-dessus peut être obtenue grâce au poids de l'unité de travail (3) et à la pesanteur. Une telle réalisation permet d'économiser au moins une conduite hydraulique, rendant la machine (1) plus simple à réaliser et à connecter au distributeur (19).

Du fait que le vérin d'allégement (5) est relié au châssis (2) par un tirant souple en compression (17), le vérin d'allégement (5) ne transmet un effort entre le châssis (2) et l'unité de travail (3) qu'en rétractation. La chambre active (5') est préférentiellement située du côté de la tige du vérin d'allégement (5). La chambre passive (5") est préférentiellement située du côté du corps du vérin d'allégement (5). Il serait possible de relier la tige du vérin d'allégement (5) à l'unité de travail (3) et le côté du corps du vérin d'allégement (5) au châssis (2). Cependant, la répartition des masses serait désavantageuse, le côté du corps étant plus lourd que le côté de la tige. En outre, relier la tige du vérin d'allégement (5) au bâti (1') ne permet pas de positionner l'articulation avant (20) ailleurs qu'à l'extrémité du vérin d'allégement (5), respectivement à l'extrémité libre de sa tige, sans limiter sa course. Ainsi qu'il ressort de la figure 1, la tige du vérin d'allégement (5) est préférentiellement reliée au châssis (2). Réciproquement, le côté du corps du vérin d'allégement (5) est, lui, relié à l'unité de travail (3) et articulé avec le bâti (1'), respectivement avec l'unité de travail (3), ailleurs qu'au niveau de l'extrémité du vérin d'allégement (5), ce sans limiter la course du vérin d'allégement (5) (voir figures 3 et 4). Le vérin d'allégement (5) fonctionne ainsi comme un simple effet dont la chambre reliée à l'air est du côté de son corps, à savoir la chambre passive (5"). Il découle de ce qui précède que lorsque la pompe (P) est reliée à la chambre active (5'), cela implique que le vérin d'allégement (5) exerce un effort sur l'unité de travail (3) dont au moins une composante est orientée vers le haut. Par ailleurs, le fait que la machine (1) comprenne un vérin d'allégement (5) ne pouvant être actionné qu'en rétractation permet qu'en configuration de transport, il soit impossible d'allonger le vérin d'allégement (5), qui pourrait sinon percuter le châssis (2), respectivement le véhicule tracteur (15), et occasionner des dégâts.

Dans le mode de réalisation préféré, la machine (1) comprend deux vérins d'allégement (5). Les deux vérins d'allégement (5) sont identiques et montés sensiblement symétriquement par rapport au plan médian (PM). Ainsi qu'il ressort des figures 5B et 5C, la chambre active (5') de chacun des vérins d'allégement (5) est reliée à la première conduite (7). Tout ce qui a été décrit pour le vérin d'allégement (5) ci-dessus est valable pour les deux vérins d'allégement (5), respectivement pour chacun des vérins d'allégement (5). Les vérins (5) sont arrangés de part et d'autre dudit axe pendulaire (AP) vu selon la direction d'avance (A), permettant de répartir équitablement l'allégement de part et d'autre de l'axe pendulaire (AP) quel que soit le relief du sol (S).

L'invention porte également sur un combiné d'attelage (100) comportant un véhicule tracteur (15) et une machine (1) selon le mode de réalisation préféré. L'invention porte aussi sur un procédé de transposition d'une machine (1) agricole en accord avec le mode de réalisation des figures 1 à 3, entre sa configuration de transport et sa configuration de travail. Ce procédé permet de transposer entre sa configuration de transport et sa configuration de travail, la machine (1) agricole destinée à être attelée à un véhicule tracteur (15) doté d'un dispositif d'attelage (16) comportant au moins un vérin de levage (4"), la machine (1) comportant une unité de travail (3) reliée à un châssis (2) du véhicule tracteur (15) par rapport auquel l'unité de travail (3) est déplaçable. Ce procédé de transposition entre configuration de transport et configuration de travail consiste, à partir de sa configuration de transport, à relier hydrauliquement la ou une chambre active (5') du vérin d'allégement (5) à la ou une pompe (P), et à placer le vérin de levage (4") en mode flottant jusqu'à ce que l'unité de travail (3) atteigne le sol (S). Ces étapes peuvent être réalisées dans n'importe quel ordre. De préférence, ces étapes sont réalisées chronologiquement dans leur ordre d'apparition évitant un choc brutal à la machine (1) et/ou l'endommagement du sol (S) à cet endroit. En effet, si l'unité de travail (3) atteint le sol (S) avant de relier la chambre active (5') du vérin d'allégement (5) à la pompe (P), la machine (1) atteint le sol (S) violemment, pouvant endommager la machine (1) et/ou le tapis végétal du sol (S) à cet endroit. La configuration de travail est ainsi préférentiellement obtenue, à partir de la configuration de transport, en reliant hydrauliquement d'abord la chambre active (5') à la pompe (P), et ensuite en reliant hydrauliquement le vérin de levage (4") à un ou au réservoir (T) jusqu'à ce que l'unité de travail (3) atteigne le sol (S). Il est sous-entendu dans ce qui précède que la configuration de travail est obtenue, à partir de la configuration de transport, d'abord en reliant hydrauliquement la chambre active (5') à la pompe (P), et ensuite, tout en maintenant cette liaison hydraulique entre la pompe (P) et la chambre active (5'), en reliant hydrauliquement le vérin de levage (4") à un ou au réservoir (T) jusqu'à ce que l'unité de travail (3) atteigne le sol (S).

Concrètement, relier hydrauliquement la chambre active (5') du vérin d'allégement (5) à la pompe (P) est préférentiellement réalisé en plaçant le distributeur (19) dans sa première position (191).

Si, contrairement au procédé précité, en position de travail, un utilisateur interdit tout écoulement de fluide hydraulique depuis et vers la chambre active (5') du vérin d'allégement (5), par exemple en plaçant le distributeur (19) en position fermée (193), suite à quoi il soulève l'unité de travail (3), par exemple en rétractant le vérin de levage (4"), alors le vérin d'allégement (5) pourrait heurter le véhicule tracteur (15) et impliquer un endommagement de la machine (1) et/ou du véhicule tracteur (15). En effet, interdire tout écoulement de fluide hydraulique depuis et vers la chambre active (5') du vérin d'allégement (5) implique le maintien de la longueur du vérin d'allégement (5). Or dans la configuration de transport, le point d'attache (24) est plus proche du châssis (2) et/ou du véhicule tracteur (15) que dans la configuration de travail. Le procédé précité de transposition entre ses configurations de transport et de travail de la machine (1) permet ainsi d'éviter un endommagement de la machine (1) et/ou du véhicule tracteur (15).

Transposer la machine (1) entre sa configuration de travail et sa configuration de transport, consiste à soulever la machine (1) via le dispositif d'attelage (16), préférentiellement en rétractant le vérin de levage (4"), puis à interdire tout écoulement de fluide hydraulique entre la machine (1) et le véhicule tracteur (15), préférentiellement en isolant la deuxième conduite (8) grâce au distributeur (19). Dételer la machine (1) du véhicule tracteur (15) consiste, à partir de la configuration de travail, à d'abord interdire tout écoulement de fluide hydraulique entre la chambre active (5') et le véhicule tracteur (15), maintenant le ou chaque vérin d'allégement (5) à longueur constante, puis à soulever l'unité de travail (3) jusqu'à ce que le ou chaque tirant souple en compression (17) soit délesté, à détacher alors du châssis (2), respectivement du site de fixation (18) le ou chaque vérin d'allégement (5), respectivement le ou chaque tirant souple en compression (17), ensuite à reposer la machine (1) au sol (S) par le biais du dispositif d'attelage (16), respectivement du vérin de levage (4"), et enfin à détacher chaque bras (4, 4', 44) de son site d'accrochage (14, 14', 14") respectif ainsi qu'à déconnecter les deuxième et troisième conduites hydrauliques (8, 11) du circuit hydraulique du véhicule tracteur (15). Dans le but de maintenir la tige du vérin d'allégement (5) propre et lisse, il est additionnellement préconisé de relier la chambre active (5') à la pompe (P) jusqu'à ce que le vérin d'allégement (5) soit complètement rétracté, ce avant de déconnecter les deuxième et troisième conduites hydrauliques (8, 11) du circuit hydraulique du véhicule tracteur (15).

Pratiquement, l'étape consistant à interdire tout écoulement de fluide hydraulique entre la chambre active (5') et le véhicule tracteur (15) revient à placer le distributeur (19) en position fermée (193). Dans sa position fermée (193), le distributeur (19) bloque la circulation de fluide hydraulique au moins entre la deuxième conduite (8) et la pompe (P).

Dans une variante de réalisation illustrée sur la figure 4, le châssis (2) fait partie intégrante de la machine (1). Les dimensions du ou de chaque vérin d'allégement (5) pouvant être adaptées au châssis (2), respectivement à sa hauteur en configuration de travail, dans cette variante, le vérin d'allégement (5) n'est pas nécessairement relié au châssis (2) par un tirant souple en compression (17). Dans cette variante, le châssis (2) comprend un cadre porteur (22) et au moins une potence (21). De plus, le vérin d'allégement (5) relie la potence (21) à l'unité de travail (3). Le cadre porteur (22) comprend un cadre d'attelage configuré pour atteler la machine (1) à un véhicule tracteur (15). La potence (21) porte au moins une unité de travail (3). La potence (21) est articulée sur le cadre porteur (22) autour d'un axe orienté de manière à pouvoir réduire l'encombrement en largeur de la machine (1), et de préférence orienté parallèlement à la direction d'avance (A). Pour transposer la machine (1) entre ses configurations de travail et de transport, la ou chaque potence (21) est pivotée autour de cet axe conjointement avec l'unité de travail (3).

Dans cette variante de la figure 4, le vérin d'allégement (5) peut également servir à placer l'unité de travail (3) dans une configuration dite de manœuvre dans laquelle l'unité de travail (3) est légèrement soulevée du sol (S) pour manœu-vrer dans un champ avec le véhicule tracteur (15). L'invention porte également sur un combiné d'attelage (100) comportant un véhicule tracteur (15), au moins une machine (1) selon la variante de la figure 4 et une machine (1) selon le mode de réalisation préféré.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir du cadre de l'invention définie par les revendications annexées.

## Revendications

1. Machine (1) agricole destinée à être attelée à un véhicule tracteur (15) et comportant une unité de travail (3) reliée à un châssis (2) par rapport auquel l'unité de travail (3) est déplaçable, la machine (1) pouvant occuper une configuration de travail dans laquelle l'unité de travail (3) repose au moins partiellement au sol (S) et une configuration de transport dans laquelle l'unité de travail (3) est soulevée du sol (S), la machine (1) comprenant un dispositif d'allégement (9) comportant au moins un vérin d'allégement (5) relié avec le châssis (2) d'un côté et avec l'unité de travail (3) de l'autre côté, le vérin d'allégement (5) pouvant reporter, en configuration de travail, au moins une partie du poids de l'unité de travail (3) sur le châssis (2), machine (1) **caractérisée en ce que** le dispositif d'allégement (9) comprend un régulateur de pression (6) relié à une chambre active (5') du vérin d'allégement (5) par une première conduite (7), le régulateur de pression (6) pouvant occuper, dans la configuration de travail de la machine (1), une première position (61) dans laquelle il autorise la circulation de fluide hydraulique entre la première conduite (7) et une deuxième conduite (8) reliant le régulateur de pression (6) avec une pompe (P) hydraulique, et une deuxième position (62) dans laquelle il autorise une circulation de fluide hydraulique entre la première conduite (7) et une troisième conduite (11) reliant le régulateur de pression (6) avec un réservoir (T), la position du régulateur de pression (6) étant dépendante de la pression dans la première conduite (7) de telle sorte que lorsque la pression dans la première conduite (7) est inférieure à une valeur de consigne, le régulateur de pression (6) occupe la première position et que lorsque la pression dans la première conduite (7) est supérieure à la valeur de consigne, le régulateur de pression (6) occupe la deuxième position.

2. Machine agricole selon la revendication 1, **caractérisée en ce qu'**elle comprend un actionneur hydraulique (12) relié à la deuxième conduite (8) par une quatrième conduite (8').

3. Machine agricole selon la revendication 2, **caractérisée en ce qu'**un limiteur de pression (46) est monté aux bornes de l'actionneur hydraulique (12), et **en ce que** la valeur de tarage du limiteur de pression est supérieure à la valeur de consigne.

4. Machine agricole selon l'une quelconque des revendications 1 à 3, **caractérisée en ce que** la troisième conduite (11) est directement reliée au ou à un réservoir (T).

5. Machine agricole selon l'une quelconque des revendications 1 à 4, **caractérisée en ce que** la deuxième conduite (8) est reliée au circuit hydraulique du véhicule tracteur (15) via un distributeur (19).

6. Machine agricole selon l'une quelconque des revendications 1 à 5, **caractérisée en ce qu'**elle comprend une conduite de vidange (13) sur laquelle est montée une valve d'arrêt (13') fermée en configuration de travail, cette conduite de vidange (13) reliant la première conduite (7) à la troisième conduite (11) en dérivation par rapport au régulateur de pression (6).

7. Machine agricole selon l'une quelconque des revendications 1 à 6, **caractérisée en ce que** le vérin d'allégement (5) est relié au châssis (2) par un tirant souple en compression (17).

8. Machine agricole selon l'une quelconque des revendications 1 à 7, **caractérisée en ce que** le vérin d'allégement (5) comprend une chambre passive (5") séparée de la chambre active (5') par un piston, la chambre passive (5") étant reliée à l'air.

9. Machine agricole selon l'une quelconque des revendications 1 à 8, **caractérisée en ce que**, dans la première position (61) du régulateur de pression (6), la troisième conduite (11) n'est pas reliée à la première conduite (7).

10. Machine agricole selon l'une quelconque des revendications 1 à 9, **caractérisée en ce que**, dans la deuxième position (62) du régulateur de pression (6), la deuxième conduite (8) n'est pas reliée à la première conduite (7).

11. Machine agricole selon l'une quelconque des revendications 1 à 10, **caractérisée en ce que** la chambre active (5') du vérin d'allégement (5) n'est reliée à aucun accumulateur de pression hydropneumatique en configuration de travail de la machine (1).

12. Machine agricole selon la revendication 5 et l'une quelconque des revendications 6 à 11, **caractérisée en ce que**, en configuration de travail de la machine (1), le distributeur (19) est dans une première position (191) dans laquelle il relie la deuxième conduite (8) à la pompe (P) et dans laquelle il relie la troisième conduite (11) au réservoir (T).

13. Procédé de transposition d'une machine (1) agricole selon l'une quelconque des revendications 1 à 12 entre sa configuration de transport et sa configuration de travail, la machine (1) étant destinée à être attelée à un véhicule tracteur (15) doté d'un dispositif d'attelage (16) comportant au moins un vérin de levage (4"), la machine (1) comportant une unité de travail (3) reliée à un châssis (2) du véhicule tracteur (15) par rapport auquel l'unité de travail (3) est déplaçable, la machine (1) pouvant occuper une configuration de travail dans laquelle l'unité de travail (3) repose au moins partiellement au sol (S) et une configuration de transport dans laquelle l'unité de travail (3) est soulevée du sol (S), la machine (1) comprenant en outre un dispositif d'allégement (9) comportant au moins un vérin d'allégement (5) relié avec le châssis (2) par un tirant souple en compression (17) d'un côté et avec l'unité de travail (3) de l'autre côté, le vérin d'allégement (5) pouvant reporter, en configuration de travail, au moins une partie du poids de l'unité de travail (3) sur le châssis (2) procédé **caractérisé en ce qu'**il consiste, à partir de la configuration de transport, à d'abord relier hydrauliquement la chambre active (5') à la pompe (P), et ensuite à relier hydrauliquement le vérin de levage (4") à un ou au réservoir (T) jusqu'à ce que l'unité de travail (3) atteigne le sol (S).

## Patentansprüche

1. Landwirtschaftliche Maschine (1), die dazu bestimmt ist, an ein Zugfahrzeug (15) angekuppelt zu werden, und die eine Arbeitseinheit (3) umfasst, die mit einem Rahmen (2) verbunden ist, in Bezug auf den die Arbeitseinheit (3) beweglich ist, wobei die Maschine (1) eine Arbeitskonfiguration, in der die Arbeitseinheit (3) sich zumindest teilweise auf dem Boden (S) stützt, und eine Transportkonfiguration einnehmen kann, in der die Arbeitseinheit (3) vom Boden (S) abgehoben wird, wobei die Maschine (1) eine Entlastungsvorrichtung (9) mit mindestens einem Entlastungszylinder (5) umfasst, der auf einer Seite mit dem Rahmen (2) und auf der anderen Seite mit der Arbeitseinheit (3) verbunden ist, wobei der Entlastungszylinder (5) in der Arbeitskonfiguration mindestens einen Teil des Gewichts der Arbeitseinheit (3) auf den Rahmen (2) übertragen kann, Maschine (1), **dadurch gekennzeichnet, dass** die Entlastungsvorrichtung (9) einen Druckregler (6) umfasst, der über eine erste Leitung (7) mit einer aktiven Kammer (5') des Entlastungszylinders (5) verbunden ist, wobei der Druckregler (6) in der Arbeitskonfiguration der Maschine (1) eine erste Position (61) einnimmt, in der er den Durchfluss von Hydraulikflüssigkeit zwischen der ersten Leitung (7) und einer zweiten Leitung (8), die den Druckregler (6) mit einer Hydraulikpumpe (P) verbindet, zulässt, und eine zweite Position (62) einnimmt, in der er einen Durchfluss von Hydraulikflüssigkeit zwischen der ersten Leitung (7) und einer dritten Leitung (11), die den Druckregler (6) mit einem Tank (T) verbindet, zulässt, wobei die Position des Druckreglers (6) abhängig vom Druck in der ersten Leitung (7) ist, so dass, wenn der Druck in der ersten Leitung (7) unter einem Sollwert liegt, der Druckregler (6) die erste Position einnimmt, und wenn der Druck in der ersten Leitung (7) über dem Sollwert liegt, der Druckregler (6) die zweite Position einnimmt.

2. Landwirtschaftliche Maschine nach Anspruch 1, **dadurch gekennzeichnet, dass** sie einen hydraulischen Aktuator (12) umfasst, der über eine vierte Leitung (8') mit der zweiten Leitung (8) verbunden ist.

3. Landwirtschaftliche Maschine nach Anspruch 2, **dadurch gekennzeichnet, dass** ein Druckbegrenzer (46) an den Anschlüssen des hydraulischen Aktuators (12) angebracht ist, und dass der Einstellwert des Druckbegrenzers größer als der Sollwert ist.

4. Landwirtschaftliche Maschine nach einem der Ansprüche 1 bis 3, **dadurch gekennzeichnet, dass** die dritte Leitung (11) direkt mit dem oder einem Tank (T) verbunden ist.

5. Landwirtschaftliche Maschine nach einem der Ansprüche 1 bis 4, **dadurch gekennzeichnet, dass** die zweite Leitung (8) über einen Verteiler (19) mit dem Hydraulikkreislauf des Zugfahrzeugs (15) verbunden ist.

6. Landwirtschaftliche Maschine nach einem der Ansprüche 1 bis 5, **dadurch gekennzeichnet, dass** sie eine Entleerungsleitung (13) umfasst, an der ein Absperrventil (13') angebracht ist, das in der Arbeitskonfiguration geschlossen ist, wobei diese Entleerungsleitung (13) die erste Leitung (7) mit der dritten Leitung (11) unter Umgehung des Druckreglers (6) verbindet.

7. Landwirtschaftliche Maschine nach einem der Ansprüche 1 bis 6, **dadurch gekennzeichnet, dass** der Entlastungszylinder (5) über eine flexible Spannstange (17) mit dem Rahmen (2) verbunden ist.

8. Landwirtschaftliche Maschine nach einem der Ansprüche 1 bis 7, **dadurch gekennzeichnet, dass** der Entlastungszylinder (5) umfasst eine passive Kammer (5"), die durch einen Kolben von der aktiven Kammer (5') getrennt ist, wobei die passive Kammer (5") mit der Luft verbunden ist.

9. Landwirtschaftliche Maschine nach einem der Ansprüche 1 bis 8, **dadurch gekennzeichnet, dass** in der ersten Position (61) des Druckreglers (6) die dritte Leitung (11) nicht mit der ersten Leitung (7) verbunden ist.

10. Landwirtschaftliche Maschine nach einem der Ansprüche 1 bis 9, **dadurch gekennzeichnet, dass** in der zweiten Position (62) des Druckreglers (6) die zweite Leitung (8) nicht mit der ersten Leitung (7) verbunden ist.

11. Landwirtschaftliche Maschine nach einem der Ansprüche 1 bis 10, **dadurch gekennzeichnet, dass** die aktive Kammer (5') des Entlastungszylinders (5) in der Arbeitskonfiguration der Maschine (1) mit keinem hydropneumatischen Druckspeicher verbunden ist.

12. Landwirtschaftliche Maschine nach Anspruch 5 und einem der Ansprüche 6 bis 11, **dadurch gekennzeichnet, dass** sich der Verteiler (19) in der Arbeitskonfiguration der Maschine (1) in einer ersten Position (191) befindet, in der er die zweite Leitung (8) mit der Pumpe (P) verbindet und in der er die dritte Leitung (11) mit dem Tank (T) verbindet.

13. Verfahren zum Umsetzen einer landwirtschaftlichen Maschine (1) nach einem der Ansprüche 1 bis 12 zwischen ihrer Transportkonfiguration und ihrer Arbeitskonfiguration, wobei die Maschine (1) dazu bestimmt ist, an ein Zugfahrzeug (15) angekuppelt zu werden, das mit einer Kupplungsvorrichtung (16) versehen ist, die mindestens einen Hubzylinder (4") umfasst, wobei die Maschine (1) eine Arbeitseinheit (3) umfasst, die mit einem Rahmen (2) des Zugfahrzeugs (15) verbunden ist, in Bezug auf den die Arbeitseinheit (3) beweglich ist, wobei die Maschine (1) eine Arbeitskonfiguration, in der die Arbeitseinheit (3) sich zumindest teilweise auf dem Boden (S) stützt, und eine Transportkonfiguration, in der die Arbeitseinheit (3) vom Boden (S) angehoben wird, einnehmen kann, wobei die Maschine (1) außerdem eine Entlastungsvorrichtung (9) mit mindestens einem Entlastungszylinder (5) umfasst, der auf einer Seite mit dem Rahmen (2) über eine flexible Spannstange (17) unter Druck und auf der anderen Seite mit der Arbeitseinheit (3) verbunden ist, wobei der Entlastungszylinder (5) in der Arbeitskonfiguration mindestens einen Teil des Gewichts der Arbeitseinheit (3) auf den Rahmen (2) übertragen kann, Verfahren **dadurch gekennzeichnet, dass** es darin besteht, ausgehend von der Transportkonfiguration zuerst die aktive Kammer (5') hydraulisch mit der Pumpe (P) zu verbinden, und dann den Hubzylinder (4") hydraulisch mit einem oder dem Tank (T) zu verbinden, bis die Arbeitseinheit (3) den Boden (S) erreicht.

## Claims

1. Agricultural machine (1) intended to be coupled to a tractor vehicle (15) and comprising a work unit (3) connected to a chassis (2) relative to which the work unit (3) can be moved, the machine (1) being able to take up a work configuration in which the work unit (3) rests at least partially on the ground (S) and a transport configuration in which the work unit (3) is raised from the ground (S), the machine (1) comprising a lightening device (9) having at least one lightening cylinder (5) connected to the chassis (2) on one side and to the work unit (3) on the other side, the lightening cylinder (5) being able to transfer, in the work configuration, at least some of the weight of the work unit (3) onto the chassis (2), machine (1) **characterised in that** the lightening device (9) comprises a pressure control valve (6) connected to an active chamber (5') of the lightening cylinder (5) by a first pipe (7), the pressure control valve (6) being able to take up, in the work configuration of the machine (1), a first position (61) in which it allows hydraulic fluid to flow between the first pipe (7) and a second pipe (8) connecting the pressure control valve (6) to a hydraulic pump (P), and a second position (62) in which it allows hydraulic fluid to flow between the first pipe (7) and a third pipe (11) connecting the pressure control valve (6) to a tank (T), the position of the pressure control valve (6) depending on the pressure in the first pipe (7) such that when the pressure in the first pipe (7) is less than a set value, the pressure control valve (6) takes up the first position and when the pressure in the first pipe (7) is greater than the set value, the pressure control valve (6) takes up the second position.

2. Agricultural machine according to claim 1, **characterised in that** the machine comprises an hydraulic actuator (12) connected to the second pipe (8) by a fourth pipe (8').

3. Agricultural machine according to claim 2, **characterised in that** a pressure limiting valve (46) is mounted on the terminals of the hydraulic actuator (12) and **in that** the set value of the pressure limiting valve is greater than the set value.

4. Agricultural machine according to any one of claims 1 to 3, **characterised in that** the third pipe (11) is connected directly to the or to a tank (T).

5. Agricultural machine according to any one of claims 1 to 4, **characterised in that** the second pipe (8) is connected to the hydraulic circuit of the tractor vehicle (15) via a control valve (19).

6. Agricultural machine according to any one of claims 1 to 5, **characterised in that** the machine comprises a drain pipe (13) fitted with a stop valve (13') closed in the work configuration, this drain pipe (13) connecting the first pipe (7) to the third pipe (11) in bypass of the pressure control valve (6).

7. Agricultural machine according to any one of claims 1 to 6, **characterised in that** the lightening cylinder (5) is connected to the chassis (2) by a flexible tie-rod (17).

8. Agricultural machine according to any one of claims 1 to 7, **characterised in that** the lightening cylinder (5) comprises a passive chamber (5") separated from the active chamber (5') by a piston, the passive chamber (5") being connected to the open air.

9. Agricultural machine according to any one of claims 1 to 8, **characterised in that**, in the first position (61) of the pressure control valve (6), the third pipe (11) is not connected to the first pipe (7).

10. Agricultural machine according to any one of claims 1 to 9, **characterised in that**, in the second position (62) of the pressure control valve (6), the second pipe (8) is not connected to the first pipe (7).

11. Agricultural machine according to any one of claims 1 to 10, **characterised in that** the active chamber (5') of the lightening cylinder (5) is not connected to any hydropneumatic pressure accumulator in the work configuration of the machine (1).

12. Agricultural machine according to claim 5 and any one of claims 6 to 11, **characterised in that**, in the work configuration of the machine (1), the control valve (19) is in a first position (191) in which it connects the second pipe (8) to the pump (P) and in which it connects the third pipe (11) to the tank (T).

13. Method for transposing an agricultural machine (1) according to any one of claims 1 to 12 between its transport configuration and its working configuration, the machine (1) being intended to be coupled to a tractor vehicle (15) fitted with a coupling device (16) comprising at least one lifting cylinder (4"), the machine (1) comprising a work unit (3) connected to a chassis (2) of the tractor vehicle (15) relative to which the work unit (3) is displaceable, the machine (1) being able to occupy a work configuration in which the work unit (3) rests at least partially on the ground (S) and a transport configuration in which the work unit (3) is raised from the ground (S), the machine (1) further comprising a lightening device (9) comprising at least one lightening cylinder (5) connected to the chassis (2) by a flexible tie rod (17) on one side and to the working unit (3) on the other side, the lightening cylinder (5) being able to transfer, in the working configuration, at least part of the weight of the work unit (3) onto the chassis (2), **characterised in that** it consists, starting from the transport configuration, in first hydraulically connecting the active chamber (5') to the pump (P), and then hydraulically connecting the lifting cylinder (4") to a or to the tank (T) until the work unit (3) reaches the ground (S).
